# EUROPÄISCHE PATENTSCHRIFT

(11) **EP 0 936 385 B1**
(45) Veröffentlichungstag und Bekanntmachung des Hinweises auf die Patenterteilung: **09.07.2003**
(21) Anmeldenummer: 99102133.8
(22) Anmeldetag: 03.02.1999
(51) Int. Cl.: F16H 59/04

(54) **Weg-Winkel-Sensor**
Displacement and angle sensor
Capteur de déplacement et d'angle

(30) Priorität: 17.02.1998 DE 19806529
(43) Veröffentlichungstag der Anmeldung: 18.08.1999
(73) Patentinhaber: Micro-Epsilon Messtechnik GmbH & Co. KG, 94496 Ortenburg (DE)
(72) Erfinder: Mednikov, Felix, 94496 Ortenburg (DE); Wisspeintner, Karl, 94496 Ortenburg (DE); Reindl, Norbert, 94081 Fürstenzell (DE); Sammereier, Eduard, Rainding, 94542 Haarbach (DE)
(74) Vertreter: Naumann, Ulrich, Dr.-Ing.

(56) Entgegenhaltungen:
- EP-A- 0 463 236
- DE-A- 3 929 681
- DE-A- 4 103 603
- DE-A- 4 429 444

## Beschreibung

Die vorliegende Erfindung betrifft einen Weg-Winkel-Sensor, insbesondere zur Bestimmung eines eingelegten Ganges im Kraftfahrzeugbereich mit vier Meßspulen (3, 4, 5, 6), die in einer X-Y-Fläche auf einem Spulenträger (2) in einem Winkel von 90° zueinander angeordnet und an eine Auswerteelektronik angeschlossen sind, und mit einem Target (7) aufweist, das im wesentlichen parallel zu der X-Y- Fläche relativ zu den Meßspulen (3, 4, 5, 6) bewegbar ist und dadurch in den Meßspulen (3, 4, 5, 6) Spannungen (U_{ind3}, U_{ind4}, U_{ind5}, U_{ind6}) induziert, aus denen die Auswerteelektronik den zurückgelegten Weg s in Y-Richtung und den Winkel α des Target (7) in einer Z-X-Fläche ermittelt.

Grundsätzlich handelt es sich hier um einen Weg-Winkel-Sensor zur Bestimmung eines zurückgelegten Weges in einer Richtung und eines Winkels in einer Fläche, die orthogonal zu der Richtung des Weges verläuft. In seiner Funktionsweise beruht ein Winkel-Sensor jedoch auf einem Weg-Sensor, wobei der ermittelte Weg dann durch eine geeignete Umwandlungsvorrichtung in den entsprechenden Winkel umgewandelt werden muß. Ebenso kann ein ermittelter Winkel problemlos in den entsprechenden zurückgelegten Weg umgewandelt werden. Die aus dem Gegenstand der vorliegenden Erfindung gewonnen Erkenntnisse können somit von einem Fachmann ohne weiteres auch auf Winkel-Weg-Sensoren, Weg-Weg-Sensoren oder Winkel-Winkel-Sensoren übertragen werden.

Aus der Praxis sind bereits verschiedene Weg-Winkel-Sensoren bekannt. So wird beispielsweise im Kraftfahrzeugbereich die Stellung eines Gangwahlhebels und damit der eingelegte Gang mittels mehrerer Sensor-Potentiometer ermittelt. Derartige bekannte Weg-Winkel-Sensoren haben jedoch den Nachteil, daß sie nur eine geringe Auflösung und damit nur eine geringe Meßgenauigkeit aufweisen. Außerdem weisen sie üblicherweise nur eine begrenzte Lebensdauer auf, da während des Meßvorgangs der Schleifer der Sensor-Potentiometer über die Potentiometerspulen schleift und der Schleifer dadurch einem Verschleiß unterworfen ist. Zuweilen weisen die Sensor-Potentiometer eine Obergrenze für die Betätigungsgeschwindigkeit auf, deren Überschreitung lebensdauerverkürzend wirkt. Darüber hinaus machen veränderliche Schleifer-Übergangswiderstände die Sensor-Potentiometer unzuverlässig.

Darüber hinaus ist es aus dem Kraftfahrzeugbereich bekannt, die Stellung des Gangwahlhebels und damit den eingelegte Gang mittels photoelektrischer oder optischer Sensoren zu bestimmen. Diese bekannten Sensoren haben allerdings den Nachteil, daß ihr Sensorsignal in hohem Maße temperaturabhängig ist und daß ihr Einsatz relativ aufwendig und teuer ist. Darüber hinaus verkürzen äußere Umwelteinflüsse, insbesondere hohe Temperaturen und Luftfeuchte, die Lebensdauer dieser bekannten Sensoren zum Teil erheblich.

Aus der DE 44 29 444 A1 ist ein gattungsgemäßer Weg-Winkel-Sensor mit vier Meßspulen bekannt, die in einer X-Y-Fläche auf einem Spulenträger in einem Winkel von 90° zueinander angeordnet und an eine Auswerteelektronik angeschlossen sind. Der Weg-Winkel-Sensor weist ein Target auf, dass im wesentlichen parallel zu der X-Y-Fläche relativ zu den Meßspulen bewegbar ist und dadurch in den Meßspulen Spannungen induziert, aus denen die Auswerteelektronik den zurückgelegten Weg s in Y-Richtung und den Winkel α des Targets in einer Z-X-Fläche ermittelt. Die Meßspulen werden hierbei mittels eines Speisespulenelements gespeist.

Die DE 39 29 681 A1 zeigt eine Sensoranordnung zur Messung eines Wegs oder eines Drehwinkels. Die Sensoranordnung umfasst mindestens zwei Meßspulen, die auf einem zylinderförmigen Spulenkörper angeordnet sind. Eine der Spulen ist hierbei auf einem hülsenförmigen Spulenkörper und die andere auf einem zylinderförmigen Spulenkörper angeordnet. Eine der Spulen ist einem elektrisch leitfähigen und nicht ferromagnetischem Bereich zugeordnet, während die andere Spule einem ferromagnetischen Bereich zugeordnet ist. Die Spulen und die zugehörigen Bereiche sind so gegeneinander angeordnet, dass bei einer relativen Bewegung der Bereiche und der Spulen zueinander gleichzeitig eine gegenseitige Änderung der Induktivität der Spulen bewirkt wird.

Der vorliegenden Erfindung liegt nunmehr die Aufgabe zugrunde, einen Weg-Winkel-Sensor derart auszugestalten und weiterzubilden, dass eine besonders kompakte Bauweise ermöglicht ist.

Der erfindungsgemäße Weg-Winkel-Sensor löst die voranstehende Aufgabe durch die Merkmale des Patentanspruches 1. Danach ist der eingangs bereits erörterte gattungsbildende Sensor derart ausgestaltet, daß die jeweils gegenüber liegenden Meßspulen in einem Abstand zueinander angeordnet sind und die benachbarten Meßspulen sich jeweils zumindest teilweise überlagern.

Ein Weg-Winkel-Sensor, der nach dem Wirbelstromprinzip arbeitet, ist äußerst robust ausgestaltet. Dadurch eignet sich der Sensor insbesondere für den rauhen Einsatz im Kraftfahrzeugbereich, beispielsweise zur Bestimmung eines eingelegten Ganges. Darüber hinaus weist der Weg-Winkel-Sensor eine hohe Meßgenauigkeit auf, wodurch er insbesondere zur Bestimmung kurzer Wege und kleiner Winkel, wie sie beispielsweise bei der Bestimmung eines eingelegten Ganges im Kraftfahrzeugbereich auftreten, geeignet ist.

Im konkreten erfolgt die Messung von Weg und Winkel induktiv und damit berührungslos, was dazu führt, daß der Weg-Winkel-Sensor nahezu keinem Verschleiß ausgesetzt ist und eine äußerst hohe Lebensdauer aufweist. Beim Einsatz des Weg-Winkel-Sensors im Kraftfahrzeugbereich zur Bestimmung eines eingelegten Ganges wird das Target mit dem Gangwahlhebel starr verbunden und folgt seinen Bewegungen während des Schaltvorgangs. Der Spulenträger mit den darauf angeordneten Meßspulen ist an einem Bereich des Kraftfahrzeugs, befestigt, relativ zu dem sich der Schalthebel während des Schaltvorgangs bewegt, beispielsweise an der Schaltkulisse. Wenn nun der Gangwahlhebel zum Einlegen eines bestimmten Ganges während des Schaltvorgangs relativ zu der Schaltkulisse bewegt wird, bewegt sich auch das Target relativ zu den Meßspulen. Dadurch werden in den Meßspulen Spannungen induziert, aus denen die Auswerteelektronik die Position des Gangwahlhebels in Y-Richtung und dessen Winkel in der Z-X-Fläche ermittelt.

Gemäß einer vorteilhaften Weiterbildung der Erfindung überlagert das Target zumindest in der Mittelstellung alle vier Meßspulen zumindest teilweise. Dadurch kann die Auswerteelektronik aus den in den Meßspulen induzierten Spannungen die Position des Gangwahlhebels und dessen Winkel-Position mit einer besonders hohen Genauigkeit ermitteln.

Um zu gewährleisten, daß das Target die Meßspulen über den gesamten Meßbereich sowohl in X- als auch in Y-Richtung überlagert und dadurch über den gesamten Meßbereich des Weg-Winkel-Sensors eine besonders hohe Genauigkeit erzielt wird, wird gemäß einer besonders vorteilhaften Weiterbildung der Erfindung vorgeschlagen, daß das Target die zwei in X-Richtung gegenüberliegenden Meßspulen jeweils mindestens um den Meßbereich Δx überlagert, bzw. daß das Target die zwei in Y-Richtung gegenüberliegenden Meßspulen jeweils mindestens um den Meßbereich Δy überlagert.

Um bei dem Weg-Winkel-Sensor mit den sich zumindest teilweise überlagernden Meßspulen zu gewährleisten, daß das Target die Meßspulen über den gesamten Meßbereich sowohl in X- als auch in Y-Richtung überlagert und dadurch über den gesamten Meßbereich des Weg-Winkel-Sensors eine besonders hohe Genauigkeit erzielt wird, wird gemäß einer besonders vorteilhaften Weiterbildung der Erfindung vorgeschlagen, daß die in X-Richtung gegenüberliegenden Meßspulen eine Breite aufweisen, die mindestens so groß ist wie die Abmessungen des Target in Y-Richtung zuzüglich des doppelten Meßbereichs Δy und daß die in Y-Richtung gegenüberliegenden Meßspulen eine Breite aufweisen, die mindestens so groß ist wie die Abmessungen des Target in X-Richtung zuzüglich des doppelten Meßbereichs Δx.

Gemäß einer anderen vorteilhaften Weiterbildung der Erfindung wird vorgeschlagen, daß jeweils zwei gegenüber liegende Meßspulen zu einer induktiven Halbbrücke zusammengeschaltet sind. Die induktiven Halbbrücken sind wiederum in wechselspannungsgespeiste Brückenschaltungen (Auswerteschaltungen der Auswerteelektronik) einbezogen. Die Auswerteelektronik kann somit aus den in den Meßspulen induzierten Spannungen die Position des Target relativ zu den Meßspulen und dessen Winkel-Position ermitteln.

Gemäß einer vorteilhaften Weiterbildung der Erfindung ist das Target um eine in Y-Richtung verlaufende Lagerachse drehbar, und der Spulenträger weist die Form eines Zylindersegments auf, wobei die Lagerachse die Längsachse des Zylinders bildet. Dadurch wird gewährleistet, daß auch bei kreisbogenförmigen Bewegungen des Target relativ zu den Meßspulen stets ein konstanter Abstand zwischen dem Target und den Meßspulen gegeben ist. Durch diesen stets konstanten Abstand zwischen Target und Meßspulen wird die Meßgenauigkeit des erfindungsgemäßen Weg-Winkel-Sensors entscheidend verbessert.

Nach einer vorteilhaften Weiterbildung der Erfindung wird vorgeschlagen, daß der Spulenträger in einer zylinderförmigen Aussparung eines Sensorgehäuses eingespannt ist. Dadurch kann ein an sich ebener Spulenträger ohne großen Aufwand in die Form eines Zylindersegments gebracht werden. In besonders vorteilhafter Weise ist der Spulenträger in der zylinderförmigen Aussparung des Sensorgehäuses eingerastet. Alternativ kann der Spulenträger aber auch durch ein zylinderförmig gewölbtes Element in die zylinderförmige Aussparung des Sensorgehäuses gedrückt werden. Dies hat den Vorteil, daß das zylinderförmig gewölbte Element den Spulenträger mit den darauf angeordneten Meßspulen vor äußeren Einflüssen, insbesondere vor mechanischen Beschädigungen und Feuchtigkeit, schützen kann.

Alternativ zu der zuvor dargestellten Ausbildung des Spulenträgers als ein Zylindersegment, kann der Spulenträger gemäß einer weiteren vorteilhaften Weiterbildung der Erfindung die Form eines Kugelsegments aufweisen. In diesem Fall ist das Target um einen Lagerpunkt drehbar, der den Mittelpunkt der Kugel bildet. Dadurch wird gewährleistet, daß auch bei kugelsegmentförmigen Bewegungen des Target relativ zu den Meßspulen stets ein konstanter Abstand zwischen dem Target und den Meßspulen gegeben ist. Durch diesen stets konstanten Abstand zwischen Target und Meßspulen wird die Meßgenauigkeit des erfindungsgemäßen Weg-Winkel-Sensors entscheidend verbessert. Diese Weiterbildung hat sich in der Praxis beim Einsatz des erfindungsgemäßen Weg-Winkel-Sensors im Kraftfahrzeugbereich zur Bestimmung des eingelegten Ganges als besonders bedeutsam erwiesen, da der Gangwahlhebel meistens um einen Lagerpunkt drehbar ist und sich demnach relativ zu den Meßspulen auf einer kugelsegmentförmigen Fläche bewegt.

Gemäß einer besonders vorteilhaften Weiterbildung der Erfindung besteht das Target aus Aluminium. Das führt zu einer Reduktion des Gewichts des erfindungsgemäßen Weg-Winkel-Sensors.

Alternativ kann das Target gemäß einer anderen Weiterbildung der Erfindung aber auch aus einem ferromagnetischen Material bestehen. Ein Target aus diesem Material eignet sich besonders gut für die induktive Weg- und Winkelmessung.

Gemäß einer vorteilhaften Weiterbildung der Erfindung besteht der Spulenkörper aus Kunststoff.

In einer anderen vorteilhaften Weiterbildung der Erfindung wird vorgeschlagen, daß die Meßspulen aus Spulendraht gewickelt sind. Alternativ können die Meßspulen zur Reduzierung der Herstellungskosten aber auch auf dem Spulenträger aufgedruckt sein. Die Meßspulen an sich können die unterschiedlichsten Formen aufweisen und auf besondere Einsatzgebiete und Einsatzbedingungen abgestimmt sein. So sind nicht nur quadratische Meßspulenquerschnitte sondern beispielsweise auch halbkreisförmige Querschnitte denkbar. Die Meßspulen kann beispielsweise flach oder halbkugelförmig ausgebildet sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispieles der Erfindung anhand der Zeichnung zu verweisen. In Verbindung mit der Erläuterung ders bevorzugten Ausführungsbeispieles der Erfindung anhand der Zeichnung werden auch im allgemeinen bevorzugte Ausgestaltungen und Weiterbildungen des beanspruchten Weg-Winkel-Sensors erläutert. In der Zeichnung zeigt:
- Fig. 1: einen erfindungsgemäßen Weg-Winkel-Sensor in Draufsicht in einer ersten Ausführungsform, und
- Fig. 32: den erfindungsgemäßen Weg-Winkel-Sensor in perspektivischer Ansicht in der Ausführungsform aus Fig. 1,
wobei in der Zeichnung
- U_{indi} =: Induktionsspannung an der Meßspule i
- s =: zu ermittelnder Weg in Y-Richtung
- α =: zu ermittelnder Winkel in der Z-X-Fläche
- Δx =: Meßbereich in X-Richtung
- Δy =: Meßbereich in Y-Richtung
bedeuten.

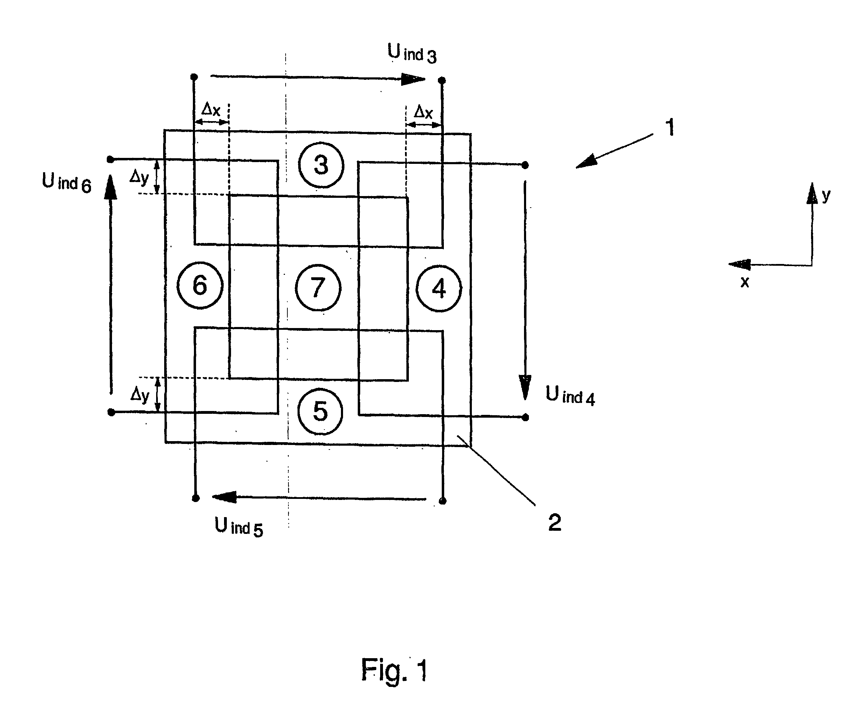

In Fig. 1 ist ein Weg-Winkel-Sensor in einer ersten Ausführungsform in seiner Gesamtheit mit dem Bezugszeichen 1 bezeichnet. Der Weg-Winkel-Sensor 1 weist einen in der X-Y-Fläche gelegenen Spulenträger 2 aus Kunststoff auf, auf dem in einem Winkel von 90° zueinander vier Meßspulen 3, 4, 5, 6 angeordnet sind. Die Lage des Weg-Winkel-Sensors 1 in dem kartesischen Koordinatensystem ist rein zufällig gewählt, und hat lediglich rein erläuternden Charakter. Die Meßspulen 3, 4, 5, 6 sind an eine Auswerteelektronik (nicht dargestellt) angeschlossen. Der Weg-Winkel-Sensor 1 weist außerdem ein Target 7 aus ferromagnetischem Material auf, das im wesentlichen parallel zu der X-Y-Fläche relativ zu den Meßspulen 3, 4, 5, 6 bewegbar ist. Das Target 7 überlagert zumindest in seiner Mittelstellung alle vier Meßspulen 3, 4, 5, 6 zumindest teilweise. Durch die Bewegung des Target 7 werden in den Meßspulen 3, 4, 5, 6 Spannungen U_{ind3}, U_{ind4}, U_{ind5}, U_{ind6} induziert. Aus den Induktionsspannungen U_{ind3}, U_{ind4}, U_{ind5}, U_{ind6} ermittelt die Auswerteelektronik den zurückgelegten Weg s in Y-Richtung und den Winkel α des Targets in einer Z-X-Fläche. Genauer gesagt wird der zurückgelegte Weg s aus den Induktionsspannungen U_{ind3} und U_{ind5} der beiden Meßspulen 3 und 5 ermittelt, und der Winkel α aus den Induktionsspannungen U_{ind4} und U_{ind6} der beiden Meßspulen 4 und 6 ermittelt.

Beim Einsatz des erfindungsgemäßen Weg-Winkel-Sensors 1 im Kraftfahrzeugbereich zur Bestimmung eines eingelegten Ganges wird das Target 7 mit dem Gangwahlhebel (nicht dargestellt) starr verbunden und folgt seinen Bewegungen während des Schaltvorgangs. Der Spulenträger 2 mit den darauf angeordneten Meßspulen 3, 4, 5, 6 ist an der Schaltkulisse (nicht dargestellt) befestigt, relativ zu der sich der Schalthebel während des Schaltvorgangs bewegt. Wenn nun der Gangwahlhebel zum Einlegen eines bestimmten Ganges während des Schaltvorganges relativ zu der Schaltkulisse bewegt wird, bewegt sich auch das Target 7 relativ zu den Meßspulen 3, 4, 5, 6. Dadurch werden in den Meßspulen 3, 4, 5, 6 Spannungen U_{ind3}, U_{ind4}, U_{ind5}, U_{ind6} induziert, aus denen die Auswerteelektronik die Position des Gangwahlhebels in Y-Richtung und dessen Winkel in der Z-X-Fläche ermittelt.

Jeweils zwei gegenüber liegende Meßspulen 3 und 5 bzw. 4 und 6 sind zu einer induktiven Halbbrücke (nicht dargestellt) zusammengeschaltet. Die induktiven Halbbrücken sind wiederum in wechselspannungsgespeisten Brückenschaltungen (Auswerteschaltungen der Auswerteelektronik) einbezogen.

Bei dem in Fig. 1 dargestellten Weg-Winket-Sensor sind die jeweils gegenüber liegenden Meßspulen 3 und 5 bzw. 4 und 6 in einem Abstand zueinander angeordnet. Die jeweils benachbarten Meßspulen 3, 4, 5, 6 überlagern sich zumindest teilweise. Die in X-Richtung gegenüber liegenden Meßspulen 4 und 6 weisen eine Breite auf, die mindestens so groß ist wie die Abmessungen des Target 7 in Y-Richtung zuzüglich des doppelten Meßbereichs Δy. Die in Y-Richtung gegenüber liegenden Meßspulen 3 und 5 weisen eine Breite auf, die mindestens so groß ist wie die Abmessungen des Target 7 in X-Richtung zuzüglich des doppelten Meßbereichs Δx.

In Fig. 23 ist der Weg-Winkel-Sensor 1 in der Ausführungsform aus Fig. 1 in perspektivischer Ansicht dargestellt. Das Target 7 ist um eine in Y-Richtung verlaufende Lagerachse 8 drehbar. Der Spulenträger 2 weist die Form eines Zylindersegments auf, wobei die Lagerachse 8 die Längsachse des Zylinders bildet. Der Weg-Winkel-Sensor 1 ermittelt den von dem Target 7 in Y-Richtung zurückgelegten Weg s und den Winkel α des Target 7 um die Lagerachse 8 in einer Z-X-Fläche.

Der Spulenträger 2 weist an sich eine ebene Form auf. Um ihn in die Form eines Zylindersegments zu bekommen wird er in eine zylinderförmige Aussparung eines Sensorgehäuses (nicht dargestellt) eingespannt. Das stellt bei einem Spulenträger 2 aus biegbarem Kunststoff kein Problem dar. Bei den auf dem Spulenkörper 2 angeordneten Meßspulen 3, 4, 5, 6 muß darauf geachtet werden, daß sie von dem Spulenmaterial her und von der Befestigungsart auf dem Spulenkörper 2 her diese Biegung in die Form eines Zylindersegments aushalten. Der Spulenkörper 2 ist in der zylinderförmigen Aussparung des Sensorgehäuses entweder eingerastet oder wird durch ein zylinderförmig gewölbtes Element in die zylinderförmige Aussparung des Sensorgehäuses gedrückt und darin verankert.

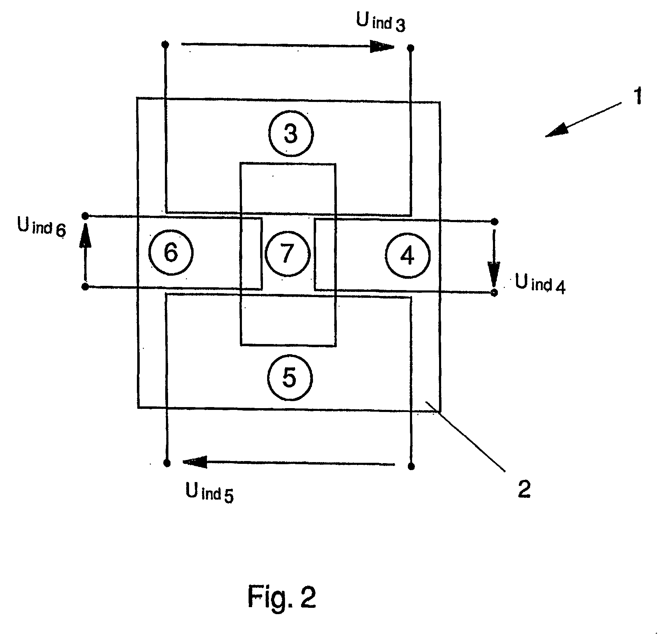

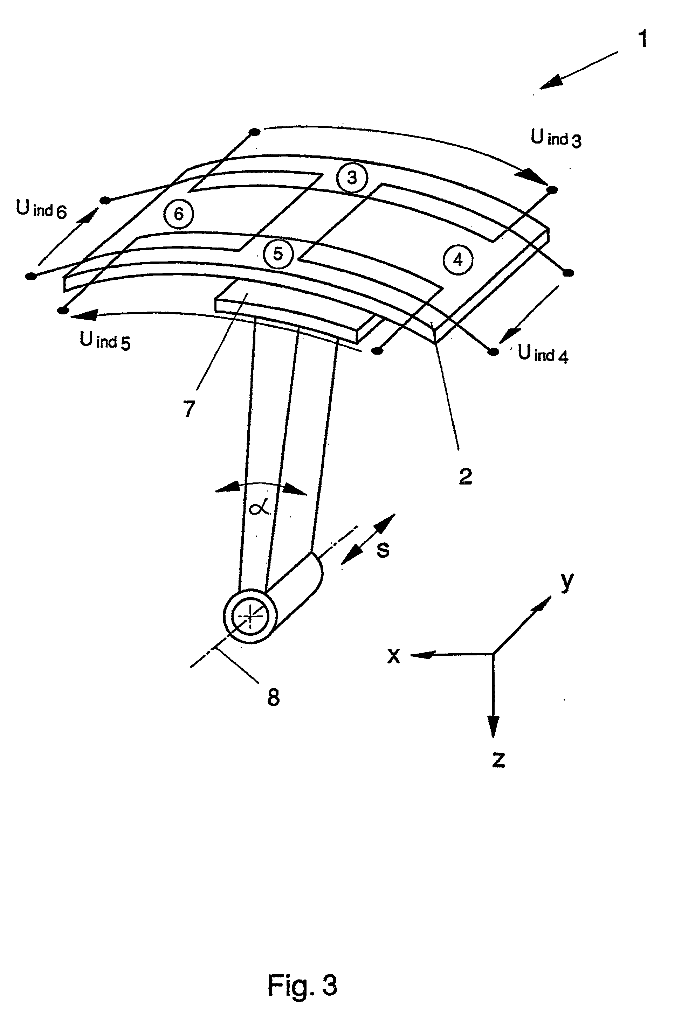

Im übrigen wird auf die beschreibenden Bestandteile der Figuren 1 und 2 verwiesen.

Abschließend sei ganz besonders hervorgehoben, daß das voranstehend lediglich beispielhaft erörterte Ausführungsbeispiel eines erfindungsgemäßen Weg-Winkel-Sensors zur Erläuterung der beanspruchten Lehre dient, dieses jedoch nicht auf das rein willkürlich gewählte Ausführungsbeispiel einschränkt.

## Patentansprüche

1. Weg-Winkel-Sensor (1), insbesondere zur Bestimmung eines eingelegten Ganges im Kraftfahrzeugbereich,
mit vier Meßspulen (3, 4, 5, 6), die in einer X-Y-Fläche auf einem Spulenträger (2) in einem Winkel von 90° zueinander angeordnet und an eine Auswerteelektronik angeschlossen sind, und mit einem Target (7) aufweist, das im wesentlichen parallel zu der X-Y-Fläche relativ zu den Meßspulen (3, 4, 5, 6) bewegbar ist und dadurch in den Meßspulen (3, 4, 5, 6) Spannungen (U_{ind3}, U_{ind4}, U_{ind5}, U_{ind6}) induziert, aus denen die Auswerteelektronik den zurückgelegten Weg s in Y-Richtung und den Winkel α des Target (7) in einer Z-X-Fläche ermittelt.,
**dadurch gekennzeichnet, daß** die jeweils gegenüber liegenden Meßspulen (3, 5 und 4, 6) in einem Abstand zueinander angeordnet sind und die benachbarten Meßspulen (3, 4; 4, 5; 5, 6 und 6, 3) sich jewells zumindest teilweise überlagern.

2. Weg-Winkel-Sensor (1) nach Anspruch 1, **dadurch gekennzeichnet, daß** das Target (7) zumindest in der Mittelstellung alle vier Meßspulen (3, 4, 5, 6) zumindest teilweise überlagert.

3. Weg-Winkel-Sensor (1) nach Anspruch 2, **dadurch gekennzeichnet, daß** das Target (7) die zwei in X-Richtung gegenüber liegenden Meßspulen (4, 6) jeweils mindestens um den Meßbereich Δx überlagert.

4. Weg-Winkel-Sensor (1) nach Anspruch 2 oder 3, **dadurch gekennzeichnet, daß** das Target (7) die zwei in Y-Richtung gegenüber liegenden Meßspulen (3, 5) jeweils mindestens um den Meßbereich Δy überlagert.

5. Weg-Winkel-Sensor (1) nach Anspruch 4, **dadurch gekennzeichnet, daß** die in X-Richtung gegenüber liegenden Meßspulen (4, 6) eine Breite aufweisen, die mindestens so groß ist wie die Abmessungen des Target (7) in Y-Richtung zuzüglich des doppelten Meßbereichs Δy.

6. Weg-Winkel-Sensor (1) nach Anspruch 4 oder 5, **dadurch gekennzeichnet, daß** die in Y-Richtung gegenüber liegenden Meßspulen (3, 5) eine Breite aufweisen, die mindestens so groß ist wie die Abmessungen des Target (7) in X-Richtung zuzüglich des doppelten Meßbereichs Δx.

7. Weg-Winkel-Sensor (1) nach einem der Ansprüche 1 bis 6, **dadurch gekennzeichnet, daß** jeweils zwei gegenüber liegende Meßspulen (3, 5 und 4, 6) zu einer induktiven Halbbrücke zusammengeschaltet sind.

8. Weg-Winkel-Sensor (1) nach einem der Ansprüche 1 bis 7, **dadurch gekennzeichnet, daß** das Target (7) um eine in Y-Richtung verlaufende Lagerachse (8) drehbar ist und der Spulenträger (2) die Form eines Zylindersegments aufweist, wobei die Lagerachse (8) die Längsachse des Zylinders bildet.

9. Weg-Winkel-Sensor (1) nach Anspruch 8, **dadurch gekennzeichnet, daß** der Spulenträger (2) in einer zylinderförmigen Aussparung eines Sensorgehäuses eingespannt ist.

10. Weg-Winkel-Sensor (1) nach Anspruch 9, **dadurch gekennzeichnet, daß** der Spulenträger (2) in der zylinderförmigen Aussparung des Sensorgehäuses eingerastet ist.

11. Weg-Winkel-Sensor (1) nach Anspruch 9, **dadurch gekennzeichnet, daß** der Spulenträger (2) durch ein zylinderförmig gewölbtes Element in die zyünderförmige Aussparung des Sensorgehäuses gedrückt wird.

12. Weg-Winkel-Sensor (1) nach einem der Ansprüche 1 bis 7, **dadurch gekennzeichnet, daß** das Target (7) um einen Lagerpunkt drehbar ist und der Spulenträger (2) die Form eines Kugelsegments aufweist, wobei der Lagerpunkt den Mittelpunkt der Kugel bildet.

13. Weg-Winkel-Sensor (1) nach einem der Ansprüche 1 bis 12, **dadurch gekennzeichnet, daß** das Target (7) aus Aluminium besteht.

14. Weg-Winkel-Sensor (1) nach einem der Ansprüche 1 bis 12, **dadurch gekennzeichnet, daß** das Target (7) aus einem ferromagnetischen Material besteht.

15. Weg-Winkel-Sensor (1) nach einem der Ansprüche 1 bis 14, **dadurch gekennzeichnet, daß** der Spulenträger (2) aus Kunststoff besteht.

16. Weg-Winkel-Sensor (1) nach einem der Ansprüche 1 bis 15, **dadurch gekennzeichnet, daß** die Meßspulen (3, 4, 5, 6) aus Spulendraht gewickelt sind.

17. Weg-Winkel-Sensor (1) nach einem der Ansprüche 1 bis 16, **dadurch gekennzeichnet, daß** die Meßspulen (3, 4, 5, 6) auf den Spulenträger aufgedruckt sind.

## Claims

1. Displacement and angle sensor (1), especially for determining an engaged gear in the motor vehicle sector,
having four measuring coils (3, 4, 5, 6) that are arranged at an angle of 90° to one another in an X-Y area on a coil support (2) and are connected to evaluation electronics, and having a target (7) that is movable relative to the measuring coils (3, 4, 5, 6) and substantially parallel to the X-Y area and thereby induces in the measuring coils (3, 4, 5, 6) voltages (U_{ind3}, U_{ind4}, U_{ind5}, U_{ind6}) from which the evaluation electronics determine the displacement s that has occurred in the Y direction and the angle α of the target (7) in a Z-X area,
**characterised in that** the measuring coils (3, 5 and 4, 6) lying opposite each other are arranged at a distance from each other and the adjacent measuring coils (3, 4; 4, 5; 5, 6 and 6, 3) at least partially overlap each other.

2. Displacement and angle sensor (1) according to claim 1, **characterised in that** the target (7) at least partially overlaps all four measuring coils (3, 4, 5, 6) at least in the middle position.

3. Displacement and angle sensor (1) according to claim 2, **characterised in that** the target (7) overlaps each of the two measuring coils (4, 6) lying opposite each other in the X direction by at least the measuring range Δx.

4. Displacement and angle sensor (1) according to claim 2 or 3, **characterised in that** the target (7) overlaps each of the two measuring coils (3, 5) lying opposite each other in the Y direction by at least the measuring range Δy.

5. Displacement and angle sensor (1) according to claim 4, **characterised in that** the measuring coils (4, 6) lying opposite each other in the X direction have a width that is at least as great as the dimensions of the target (7) in the Y direction plus double the measuring range Δy.

6. Displacement and angle sensor (1) according to claim 4 or 5, **characterised in that** the measuring coils (3, 5) lying opposite each other in the Y direction have a width that is at least as great as the dimensions of the target (7) in the X direction plus double the measuring range Δx.

7. Displacement and angle sensor (1) according to any one of claims 1 to 6, **characterised in that** two measuring coils (3, 5 and 4, 6) lying opposite each other are in each case interconnected to form an inductive half bridge.

8. Displacement and angle sensor (1) according to any one of claims 1 to 7, **characterised in that** the target (7) is rotatable about a bearing axis (8) extending in the Y direction and the coil support (2) has the shape of a cylinder segment, the bearing axis (8) forming the longitudinal axis of the cylinder.

9. Displacement and angle sensor (1) according to claim 8, **characterised in that** the coil support (2) is clamped in a cylindrical recess of a sensor housing.

10. Displacement and angle sensor (1) according to claim 9, **characterised in that** the coil support (2) is engaged in the cylindrical recess of the sensor housing.

11. Displacement and angle sensor (1) according to claim 9, **characterised in that** the coil support (2) is pressed into the cylindrical recess of the sensor housing by a cylindrically curved element.

12. Displacement and angle sensor (1) according to any one of claims 1 to 7, **characterised in that** the target (7) is rotatable about a bearing point and the coil support (2) is in the shape of a sphere segment, the bearing point forming the centre of the sphere.

13. Displacement and angle sensor (1) according to any one of claims 1 to 12, **characterised in that** the target (7) consists of aluminium.

14. Displacement and angle sensor (1) according to any one of claims 1 to 12, **characterised in that** the target (7) consists of a ferromagnetic material.

15. Displacement and angle sensor (1) according to any one of claims 1 to 14, **characterised in that** the coil support (2) consists of plastics material.

16. Displacement and angle sensor (1) according to any one of claims 1 to 15, **characterised in that** the measuring coils (3, 4, 5, 6) are wound from coil wire.

17. Displacement and angle sensor (1) according to any one of claims 1 to 16, **characterised in that** the measuring coils (3, 4, 5, 6) are printed onto the coil support.

## Revendications

1. Capteur de déplacement et d'angle (1), en particulier pour déterminer une vitesse enclenchée dans le domaine des véhicules automobiles, avec quatre bobines de mesure (3, 4, 5, 6) qui sont disposées sur un support de bobines (2) à un angle de 90° les unes par rapport aux autres et sont raccordées à une électronique d'exploitation et qui présente une cible (7) qui est mobile relativement aux bobines de mesure (3, 4, 5, 6) sensiblement parallèlement à la surface X-Y et induit de ce fait dans les bobines de mesure (3, 4, 5, 6) des tensions (U_{ind3}, U_{ind4}, U_{ind5}, U_{ind6}) par lesquelles l'électronique d'exploitation détermine le trajet parcouru en direction Y et l'angle α de la cible (7) dans une surface Z-X,
**caractérisé en ce que** les bobines de mesure (3, 5 et 4, 6) se trouvant respectivement en face l'une de l'autre sont disposées à une certaine distance l'une de l'autre et les bobines de mesure (3, 4 ; 4, 5 ; 5, 6 et 6,3) adjacentes se superposent respectivement au moins partiellement.

2. Capteur de déplacement et d'angle (1) selon la revendication 1,
**caractérisé en ce que** la cible (7) est superposée au moins partiellement au moins en position centrale aux quatre bobines de mesure (3, 4, 5, 6).

3. Capteur de déplacement et d'angle (1) selon la revendication 2,
**caractérisé en ce que** la cible (7) est superposée au moins autour de la zone de mesure Δx respectivement aux deux bobines de mesure (4, 6) se trouvant en face l'une de l'autre en direction X.

4. Capteur de déplacement et d'angle (1) selon la revendication 2 ou 3,
**caractérisé en ce que** la cible (7) est superposée au moins autour de la zone de mesure Δy aux deux bobines de mesure (3, 5) se trouvant en face l'une de l'autre en direction Y.

5. Capteur de déplacement et d'angle (1) selon la revendication 4,
**caractérisé en ce que** les bobines de mesure (4, 6) se trouvant en face l'une de l'autre en direction X présentent une largeur qui est au moins aussi grande que les dimensions de la cible (7) en direction Y en plus du domaine de mesure Δy. double.

6. Capteur de déplacement et d'angle (1) selon la revendication 4 ou 5,
**caractérisé en ce que** les bobines de mesure (3, 5) se trouvant en face l'une de l'autre en direction Y présentent une largeur qui au moins aussi grande que les dimensions de la cible (7) en direction X en plus du domaine de mesure Δx. doublé.

7. Capteur de déplacement et d'angle (1) selon l'une des revendications 1 à 6, **caractérisé en ce que** respectivement deux bobines de mesure (3, 5 et 4, 6) se trouvant en face l'une de l'autre sont interconnectées selon un demi-pont inductif.

8. Capteur de déplacement et d'angle (1) selon l'une des revendications 1 à 7, **caractérisé en ce que** la cible (7) est pivotante autour d'un axe de palier (8) s'étendant en direction Y et le support de bobines (2) présente la forme d'un segment de cylindre, l'axe de palier (8) formant l'axe longitudinal du cylindre.

9. Capteur de déplacement et d'angle (1) selon la revendication 8,
**caractérisé en ce que** le support de bobines (2) est encastré dans un évidement de forme cylindrique d'un carter de capteur.

10. Capteur de déplacement et d'angle (1) selon la revendication 9,
**caractérisé en ce que** le support de bobines (2) est encliqueté dans l'évidement de forme cylindrique du carter de capteur.

11. Capteur de déplacement et d'angle (1) selon la revendication 9,
**caractérisé en ce que** le support de bobines (2) est comprimé par un élément cintré en forme de cylindre dans l'évidement de forme cylindrique du carter de capteur.

12. Capteur de déplacement et d'angle (1) selon l'une des revendications 1 à 7, **caractérisé en ce que** la cible (7) est pivotante autour d'un point de palier et le support de bobines (2) présente la forme d'un segment sphérique, le point de palier formant le centre de la sphère.

13. Capteur de déplacement et d'angle (1) selon l'une des revendications 1 à 12,
**caractérisé en ce que** la cible (7) est constituée d'aluminium.

14. Capteur de déplacement et d'angle (1) selon l'une des revendications 1 à 12,
**caractérisé en ce que** la cible (7) est constituée d'une matière ferromagnétique.

15. Capteur de déplacement et d'angle (1) selon l'une des revendications 1 à 14,
**caractérisé en ce que** le support de bobines (2) est constitué de matière synthétique.

16. Capteur de déplacement et d'angle (1) selon l'une des revendications 1 à 15,
**caractérisé en ce que** les bobines de mesure (3, 4, 5, 6) sont bobinées en fil à bobines.

17. Capteur de déplacement et d'angle (1) selon l'une des revendications 1 à 16,
**caractérisé en ce que** les bobines de mesure (3, 4, 5, 6) sont emmanchées par pression sur le support de bobines.
